# EUROPEAN PATENT SPECIFICATION

(11) **EP 3 010 356 B1**
(45) Date of publication and mention of the grant of the patent: **15.03.2017**
(21) Application number: 14728535.7
(22) Date of filing: 04.06.2014
(51) Int. Cl.: A23L 33/00, A47J 31/06, A47J 31/36, A47J 31/40, A47J 31/44, B65D 85/804, B65D 85/808

(54) **FILTER UNIT FOR A CAPSULE**
FILTEREINHEIT FÜR EINE KAPSEL
UNITÉ DE FILTRE POUR CAPSULE

(30) Priority: 18.06.2013 EP 13172458
(43) Date of publication of application: 27.04.2016
(73) Proprietor: Nestec S.A., 1800 Vevey (CH)
(72) Inventor: KOHLI, Hans-Markus, CH-1442 Montagny-près-Yverdon (CH); ABRAHAM, Sophie, F-25160 Remoray (FR); WYSS, Heinz, CH-3672 Oberdiessbach (CH); SUBLET, Renaud, F-88800 Vittel (FR)
(74) Representative: Borne, Patrice Daniel
(86) International application number: PCT/EP2014/061521
(87) International publication number: WO 2014/202383

(56) References cited:
- EP-A1- 2 236 437
- WO-A1-2009/092629
- WO-A1-2010/128051
- US-A1- 2003 222 089

## Description

The present invention is directed to a filter unit for a capsule for preparing a beverage and/or nutritional product. The invention is further directed to a capsule comprising said filter unit. In particular, the filter unit of the present invention comprises a microbiological filter and a pre-filter.

From the prior art a filter unit is known, which is placed inside a capsule to remove contaminants from a liquid injected into the capsule, before the injected liquid interacts with beverage and/or nutritional ingredients inside the capsule. The filter unit has a filter chamber, in which a microbiological membrane is disposed. The microbiological membrane is typically connected by pinching it between an upper and lower casing of the filter chamber and/or by welding it to the upper and/or lower casing.

For example, WO 2010/128031 A1 discloses a capsule designed for preparing a nutritional product suited to be used in a device, which is adapted to inject a liquid into the capsule. The capsule comprises a compartment, which houses a filter unit for removing contaminants contained in the injected liquid. The filter unit comprises a micro-porous membrane inserted into a pressure-resistant casing. The capsule further comprises a compartment for beverage or nutritional ingredients. The filter unit has a filtering surface, which is smaller than the cross-section of the mouth of the ingredient compartment.

The capsule filtration system using the filter unit of the prior art has the disadvantage that the micro-porous membrane within the filter unit quickly becomes blocked by larger particles such as scale, bio-film, iron oxide or the like. Due to this blockage the liquid flow through a capsule comprising said filter unit is significantly reduced, and the production of the beverage or nutritional product is slowed down.

The prior art offers no direct solution to the blockage problem. The prior art only suggests the use of a bottled and/or pre-filtered liquid instead of, for example, tap water. Alternatively, the prior art suggests filtering tap water, either at the tap water outlet or at any other place in the tap water circuit. However, both solutions do not assure the performance of the capsule system, for instance, because a regular maintenance of filters in the tap water circuit is required.

WO 2010/128051 A1 discloses a capsule for the preparation of a nutritional product in a device adapted to supply liquid in the capsule.

The present invention has the goal to improve the prior art, in particular in view of the above-mentioned disadvantages. Therefore, it is an object of the present invention to provide a filter unit and a capsule, which exhibit a more consistent filtered liquid flow, and allow a more reliable, eventually faster, production of a beverage and/or nutritional product such as infant formula. To this end, it is an object of the present invention to avoid the blockage of a microbiological filter used in a filter unit and/or capsule. Further, it is an object of the present invention to provide a filter unit and a capsule, which are usable independent from the used liquid source.

The solution to the above-mentioned objects is achieved with a filter unit, a capsule, and a manufacturing method of a capsule, respectively, as described in the independent claims of the present invention. The dependent claims develop further advantages of the present invention.

In particular, the present invention is directed to a filter unit for a capsule for preparing a beverage and/or nutritional product, the filter unit comprising an upper casing comprising or forming a liquid inlet, a lower casing comprising or forming a liquid outlet, a first filter provided between the upper casing and the lower casing, a second filter provided between the first filter and the upper casing, wherein the second filter has a larger pore size than the first filter. Compared to the prior art, the filter unit of the present invention has an additional filter placed upstream of the first filter or pre-filter, namely the second filter. The second filter is positioned upstream of the first filter in respect to the liquid flow through the capsule. The second filter with its larger pores is able to hold back larger particles (e.g. scale, bio-film, iron oxide etc.), and will thus avoid a blockage of the first filter. As a consequence the filter unit of the present invention experiences no liquid flow reduction when, for instance, it is used with tap water. Therefore, any capsule comprising the filter unit of the present invention is independent of the used liquid source. The pre-filtration inside the filter unit will further ensure a fast production of the beverage and/or nutritional product. With the filter unit of the present invention, existing nutritional delivery systems can be upgraded. However, the filter unit of the present invention can also be integrated into newly designed capsules, which are then well suited to produce in an absolutely hygienic manner beverage and/or nutritional products such as infant formula.

Preferably, the first filter has a pore size of about 0.1 to 0.45 µm, preferably of about 0.2 µm.

The first filter is specifically designed for removing contaminants and/or bacteria from the liquid injected into the capsule, before the injected liquid interacts with any beverage and/or nutritional ingredients. Thus, the filter unit provides a capsule with very good hygiene, so that the produced beverage and/or nutritional products are usable as infant formula.

Preferably, the first filter is a microbiological filter, preferably a micro-porous membrane.

Preferably, the second filter has a pore size of about 0.6 to 20 µm, preferably of about 5 to 15 µm.

The preferred pore size of the second filter is specifically chosen for filtering out larger particles such as scale, bio-film and/or iron oxide. These larger particles are the typical cause of the blockage of the first filter, for example, when tap water is used as an injection liquid.

Preferably, the first filter and the second filter are adjacent and more preferably joined together. The first filter and second filter can be formed of two porous layers assembled together by any suitable technology such as lamination or welding.

Preferably, the upper casing and the lower casing are attached together by welding or clipping.

In an alternative, the first and second filter can be spaced to each other. In this case, the first and second filter can be separated by a support member such as a grid.

The first filter or second filter may be charged positively or negatively to remove certain contaminant particles sensitive to the charges (e.g., endotoxins, viruses, colloids). An additional layer, positively or negatively charged, can be provided to the first or second filter.

In an embodiment, the upper casing and the lower casing are attached together by welding.

In another embodiment, the upper casing and the lower casing are attached together by overmoulding.

Preferably, an interface of the upper casing and the lower casing is sealed with an overmoulded ring, wherein the overmoulded ring preferably seals the first filter and/or the second filter to the upper casing and/or the lower casing to prevent a bypass of liquid.

The overmoulded ring ensures that the connection of the upper casing and the lower casing of the filter unit is liquid-tight. Even when the used liquid is injected into the filter unit under high pressure, the filter unit is pressure-resistant and remains sealed. The use of an overmoulded ring further reduces the likelihood of defects at the sealed interface, and thus leads to a higher number of filter units that can be obtained during production. The sealing of the first and/or the second filter by the overmoulded ring ensures further that all the liquid injected into the capsule is actually pre-filtered and/or filtered, and thus improves even further the hygiene of the produced beverage and/or nutritional product. Finally, the filter unit allows a liquid under larger pressures to be injected, thereby allowing for an improved beverage extraction in the capsule.

Preferably, the filter unit comprises a liquid delivery portion for delivering a liquid received via the liquid inlet into the capsule.

The liquid delivery portion is preferably designed such that it transports the filtered liquid sideways away from the filter unit. In particular, when the filter unit is installed into a capsule, the liquid inlet of the filter unit should be spatially separated from the liquid outlet at the end of the liquid delivery portion, particularly in a way that the capsule can have two adjacent compartments. One compartment is for seating the filter unit and for receiving the injected liquid, and one compartment is for housing the beverage and/or nutritional ingredients and for receiving the filtered liquid from the liquid delivery portion. Thereby, the beverage and/or nutritional ingredients within the capsule never come in contact with liquid injection means.

Preferably, the filter unit further comprises a support grid for the first filter or the joined first and second filters, the support grid preferably being clipped to the lower casing.

The support grid ensures that the two filters are not damaged during the use of the filter unit. In particular, even when liquid is injected under high pressure into the filter unit, the support grid ensures the integrity of the two filters.

Preferably, the filter unit further comprises an air inlet that is separate from the liquid inlet, and is preferably formed integrally with the upper casing.

Via the air inlet pressurized air can be injected into a capsule provided with the filter unit. The injected air bypasses the two filters. The injected air ensures that the capsule is emptied completely of liquid after the beverage has been produced by the interaction of the injected liquid and the beverage and/or nutritional ingredients.

The present invention is further directed to a capsule for preparing a beverage and/or nutritional product, the capsule comprising a filter unit according to the above description.

A capsule with the filter unit of the present invention will produce highly hygienic beverages and/or nutritional products, and will ensure a higher and more stable water flow for a prolonged amount of time.

Preferably, the capsule comprises a body having a first compartment for beverage and/or nutritional ingredients and a second compartment configured as a seat for receiving the filter unit such that the filter unit is adapted to deliver a liquid received via the liquid inlet into the first compartment.

The capsule has thus a liquid injection portion, where liquid is injected into the filter unit, which is separated from a beverage production portion, where the filtered liquid is received for interacting with the beverage ingredients. Thus, the beverage ingredients do not come into contact with the liquid injection means. Thereby, the hygiene of the produced beverage and/or nutritional product is improved.

In possible variants, the filter unit may be formed as a partially integrated part of the capsule. For example, one of the upper casing or lower casing may be part of the body of the capsule. The upper casing may also be constituted by a portion of the upper membrane of the capsule. In this case, the lower casing may be a part of the body itself or a separate member. The lower casing may be formed, at least partially, by the second compartment of the capsule.

The invention is further directed to a capsule for preparing a beverage and/or nutritional product, comprising a first compartment for containing a beverage and/or nutritional ingredient and a second compartment in fluid communication with the first compartment and configured as a seat for receiving at least a first filter and at least a second filter such that the first and second filters are adapted to filter a liquid fed in the second compartment before it enters the first compartment,
wherein the second filter has a larger pore size than the first filter and wherein the first filter is placed in fluid communication between the second filter and the first compartment.

Preferably, the second filter has a pore size of about 0.6 to 20 µm, more preferably of about 5 to 15 µm.

Preferably, the first filter has a pore size of about 0.1 to 0.45 µm, preferably of about 0.2 µm.

The first filter can be a microbiological filter, preferably a micro-porous membrane.

The first and the second filter can be adjacent, preferably be joined together. The first and second filter can also be spaced one another.

The first and second filters can be encased in a filter unit as defined by aforementioned characteristics.

The present invention is further directed to a manufacturing method for a filter unit for a capsule for preparing a beverage and/or nutritional product, the method comprising the steps of: bringing together a first layer and a second layer of material from two separate material rolls using a derolling system, cutting the first layer and the second layer to obtain a first filter and a second filter, respectively, placing the first filter between an upper casing and a lower casing comprising a liquid inlet and a liquid outlet, respectively, and placing the second filter between the first filter and the upper casing.

The filter unit of the present invention may be assembled in one or two steps by welding, clipping or overmoulding technology. Both layers may be joined before assembly in the filter unit.

Preferably, the first layer of material has pores of a pore size of about 0.1 to 0.45 µm, preferably of about 0.2 µm, and the second layer of material has pores of a pore size of about 0.6 to 20 µm, preferably of about 5 to 15 µm.

The manufacturing method produces a filter unit having a second filter with pores that are larger than the pores of the first filter. The filter unit produced by the manufacturing method of the present invention can hold back larger particles contained in the injected liquid, which removes the problem of blockage or clogging of the first filter. Thereby, a flow reduction though the filter unit is avoided.

The present invention will now be described in respect to the attached drawings in more detail.
- Fig. 1: shows a capsule with a filter unit of the present invention.
- Fig. 2: shows an example of a second filter of a filter unit of the present invention.
- Fig. 3: shows a filter unit of the present invention.

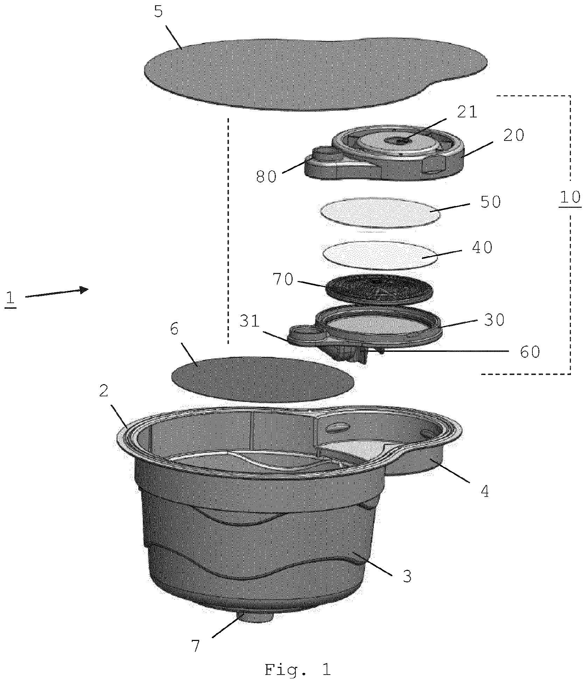

In Fig. 1 all parts of a filter unit 10 and a capsule 1, respectively, of the present invention are shown in an exploded view, i.e. as before assembly. The filter unit 10 of the present invention comprises an upper casing 20 and a lower casing 30. The upper casing 20 can be assembled with the lower casing 30, i.e. it can be attached to the lower casing 30. In between the two casings 20 and 30, two filters 40 and 50, namely a first filter 40 and a second filter 50, are disposed. Preferably, a support grid 70 supports the two filters 40 and 50 on the lower casing 30. The upper casing 20, the lower casing 30, the two filters 40 and 50, and preferably the support grid 70, form the filter unit 10.

The upper casing 20 has a liquid inlet 21, and the lower casing 30 has a liquid outlet 31. Preferably, the liquid outlet 31 is the outlet of a liquid delivery portion 60, which is attached to the outer surface of the lower casing 30. The liquid delivery portion 60 is adapted to receive the filtered liquid from the lower casing 30 so as to deliver it sideways and away from the filter unit 10, for instance, sideways into a beverage ingredient compartment of the capsule 1. The liquid delivery portion 60 is preferably formed integrally with the lower casing 30. The liquid delivery portion 60 is preferably designed to deliver the liquid injected into the filter unit 10 to a position adjacent to the filter unit 10, after it has been filtered by the filters 40 and 50.

The filter unit 10 shown Fig. 1 has a round shape, i.e. it has at least a round shaped main part. Attached to the round shaped main part is preferably attached an air inlet structure 80. As shown in Fig. 1, the air inlet 80 can also be divided into an upper part, which is attached to the upper casing 20, and lower part, which is attached to the lower casing 30. Through the air inlet 80 of the assembled filter unit 10, air can be injected and mix with the liquid output from the filter unit 10. Preferably, the liquid delivery portion 60 is therefore designed internally in such a way that it receives air injected via the air inlet 80, and outputs the air at the liquid outlet 31 towards the first compartment 3.

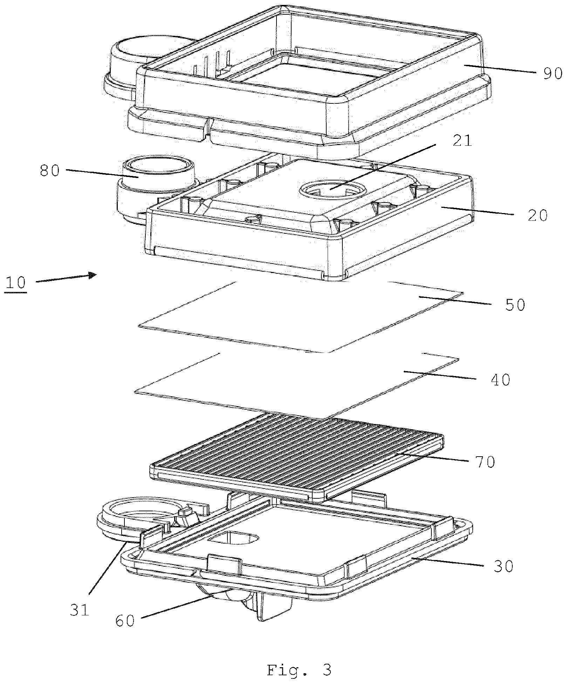

As explained below in relation to Fig. 3, the filter unit 10 of the present invention can also be square-shaped or can be rectangular shaped, i.e. it can at least have a square- or rectangular shaped main part. In this case, the two filters 40 and 50 preferably have a square or rectangular shape as well, which is an optimal shape for saving filter material (i.e., by optimizing the cutting of the filter in a band of filter material).

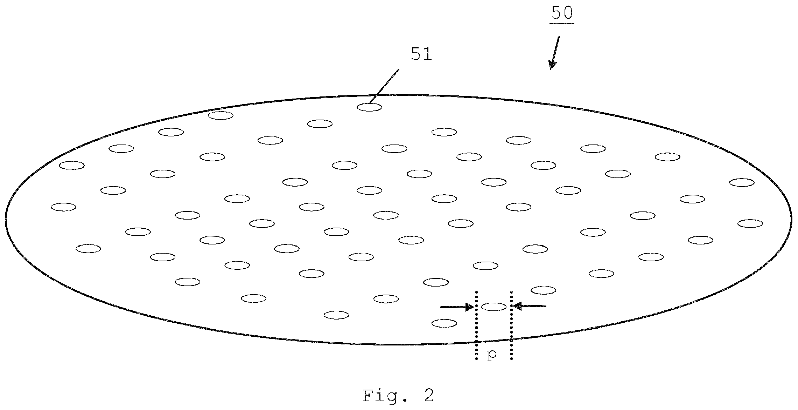

Fig. 2 shows a detailed view of the second filter 50 of the filter unit 10, which acts as a pre-filter. The second filter 50 is preferably a thin membrane. Preferably, the filter 50 is a nano- or micro-porous membrane, and comprises a plurality of pores 51 that allow a passage of liquid, but not of larger particles. In Fig. 2 a plurality of pores 51 are shown distributed over the surface of the second filter 50. However, the pores 51 are not necessarily shown to scale, and can also have different shapes, and can be distributed differently over the surface of the second filter 50.

Preferably, the pore size p of the pores 51 of the second filter 50 is about 1 to 40 µm, more preferably of about 0.6 to 20 µm, most preferably of about 5 to 15 µm. The pore size p is however not strictly limited to this size. A pore size p of preferably 0.6 to 20 µm, most preferably 5 to 15 µm is well suited to reduce scale, bio-film or iron oxide from the liquid injected into the filter unit 10.

The second filter can be mono- or multi-layer. The second filter can be charged positively or negatively. An Example of second filter is a Sartobind (registered trademark) membrane manufactured by Sartorius, which is positively or negatively charged and has a pore size of about 3 microns. Another example for the second layer is a filter membrane Nanotrap (registered trademark) from Coway company formed of nano-fibres and having a pore size of about 2 microns. Another example is a filter membrane Cuno Zetaplus EC series (registered trademarks) from 3M company designed for metal particle retention.

The liquid filtered by the second filter 50 subsequently passes the first filter 40, which is preferably a nano- or micro-porous membrane as well. However, the first filter 40 has preferably a plurality of pores, which have a preferred pore size of about 0.10 to 0.45 µm, more preferably of about 0.1 to 0.25 µm, most preferably of about 0.2 µm. The first filter 40 can also be a mono- or multi-layer. It can further be positively or negatively charged. For example, the material of the membrane can be chosen from the list consisting of PES (polyethersulfone), cellulose acetate, cellulose nitrate, polyamide and combinations thereof.

As shown in Fig. 1, the filter unit 10 can be placed into a capsule having a capsule body 2, a first compartment 3 and a second compartment 4. In particular, the filter unit 10 is placed into the second compartment 4. The second compartment 4 is preferably a seat, into which the filter unit 10 is fitted. Preferably, the filter unit 10 and the seat comprise cooperating means for clipping the filter unit 10 to the seat for attachment. The filter unit 10 is preferably designed in a way, preferably by means of the liquid delivery portion 60, that it delivers the filtered liquid into the second compartment 3 of the capsule body 2, which contains the beverage and/or nutritional ingredients. The first compartment 3 and the second compartment 4 are preferably provided adjacent to each other in respect to the rotational axis of the ingredient compartment 3. Due to the adjacent arrangement of the first compartment 3 and the second compartment 4, the liquid injection portion of the capsule is strictly separated from the beverage production portion of the capsule 1. In other words the beverage and/or nutritional ingredients within the compartment 3 never come into contact with the liquid injection means that inject liquid into the filter unit 10. Further, the first compartment 3 is only provided with filtered liquid from the filter unit 10. Thus, the beverage and/or nutritional product produced by the capsule 1 are very hygienic and well suited as infant formula.

The two-filter system arranged inside the capsule 1 has the effect that the first filter 40 is never blocked by large particles, and as a consequence the liquid flow through the capsule 1 is not reduced, i.e. remains high and stable. In particular, the capsule 1 can also be used with any kind of liquid source, e.g. tap water, and does not strictly require a pre-filtered liquid to be injected into the filter unit 10.

The capsule 1 further has an upper membrane 5 and a lower membrane 6 to seal the capsule 1, in particular the filter unit 10 and the beverage and/or nutritional ingredients within the first compartment 3. Because the capsule 1 is only opened shortly before injection of water, the risk of contaminants entering the capsule 1 is largely suppressed. The upper and lower membrane 5 and 6 can be pierced from the outside by means of a beverage production apparatus. Preferably, the upper membrane 5 can be perforated for liquid injection into the capsule, whereas the lower membrane 6 can be perforated for dispensing beverage from the capsule. For example, a liquid injector such as a hollow needle perforates the upper membrane 5 above the liquid inlet 21 and enters the liquid inlet 21 of the filter unit. Alternatively, the capsule 1 can also be provided with opening means within the capsule 1, which are adapted to puncture or rupture either one or both of the membranes 5 or 6, respectively, from the inside. For instance, internal opening means can be operated by water pressure building up at the liquid inlet side of the capsule 1 or within the capsule 1.

The capsule 1 is further provided with a liquid outlet 7, which preferably formed as a spout. The liquid outlet 7 can comprise means for redirecting the produced beverage, or means for foaming the produced beverage.

Fig. 3 shows another filter unit 10 of the present invention, wherein parts of the filter unit 10 having the same reference signs as in Fig. 1 are as described above. In this embodiment the filter unit 10 is square-shaped. The seat, i.e. the second compartment 4, of the capsule 1 has to be designed accordingly. Again the filter unit 10 at least comprises an upper casing 20, a lower casing 30, a first filter 40 and a second filter 50. The filters 40 and 50 are preferably designed as described above.

Fig. 3 further shows the support grid 70, onto which the filters 40 and 50 can be placed. The support grid 70 is preferably clipped to the lower casing 30. The lower casing 30 and the upper casing 20 are preferably clipped together. To this end, the lower casing 30 can, for example, include protrusions that engage a rim provided on the upper casing 20. Fig. 3 also shows an overmoulded ring 90 that can be overmoulded over an interface of the upper casing 20 and the lower casing 30 after the two casings are attached together. The overmoulded ring 90 achieves that the filter unit 10 is liquid-tight even at high pressures of injected liquid. Also the air inlet 80 is shown, which can be divided into a part of the upper casing 20 and a part of the lower casing 30. The air inlet forms a traversing conduit which enables air injected in to bypass the filters and inject air in the compartment 3 of the capsule. The two parts fit together when the filter unit 10 is assembled. The overmoulded ring 90 can comprise a second overmoulded ring that covers the interface of the two parts of the air inlet 80.

The filter unit 10 of the present invention is preferably assembled as follows. To assemble the first and the second filter 40 and 50, two layers from two separate material rolls are brought together on a capsule manufacturing assembly line. In particular, a derolling system is used to bring together the two layers. The two layers are further cut into the first filter 40 and the second filter 50, and are then placed together in a filter chamber consisting of the upper casing 20 and the lower casing 30. Both filters 40 and 50 are then fixed by welding, clipping or overmoulding in the filter chamber. Preferably, the two layers are joined together before assembly in the filter chamber. The assembly of the filter unit 10 can be carried out in one step or in two steps.

In possible variants (not illustrated), the filter unit 10 may be formed as a partially integrated part of the capsule 1. For example, the upper casing 20 or lower casing 30 may be part of the body 2 of the capsule. The upper casing 20 may also be formed by a portion of the upper membrane 5 of the capsule. The lower casing 30 may be formed, at least partially, by the second compartment 4 of the capsule.

In summary, the present invention provides a filter unit 10 that is designed to avoid a blockage of its microbiological filter, i.e. the first filter 40, and is suited for a small filter assembly system as required for a capsule system. The filter unit 10 further comprises a pre-filter, i.e. the second filter 50, which is provided just before the microbiological filter, and has a pore size to hold back large particles like scale, bio-film or iron oxide. The present invention achieves a solution to the problem of liquid flow reduction through the filter unit, which is caused by the blockage of the first filter 40. The filter unit of the present invention is further fully independent from the used liquid source.

## Claims

1. Filter unit (10) for a capsule (1) for preparing a beverage and/or nutritional product, the filter unit (1) comprising
an upper casing (20) comprising or forming a liquid inlet (21),
a lower casing (30) comprising or forming a liquid outlet (31),
a first filter (40) provided between the upper casing (20) and the lower casing (30),
a second filter (50) provided between the first filter (40) and the upper casing (20),
wherein the second filter (50) has a larger pore size than the first filter (40).

2. Filter unit (10) according to claim 1, wherein the second filter (50) has a pore size (p) of about 0.6 to 20 µm, preferably of about 5 to 15 µm.

3. Filter unit (10) according to one of the claims 1 to 2, wherein the first filter (40) has a pore size of about 0.1 to 0.45 µm, preferably of about 0.2 µm.

4. Filter unit (10) according to one of the claims 1 to 3, wherein the first filter (40) is a microbiological filter, preferably a micro-porous membrane.

5. Filter unit (10) according to one of the claims 1 to 4, wherein the first and the second filter (40, 50) are joined together.

6. Filter unit (10) according to one of the claims 1 to 5, wherein the upper casing (20) and the lower casing (30) are attached together by welding or clipping.

7. Filter unit (10) according to one of the claims 1 to 5, wherein the upper casing (20) and the lower casing (30) are attached together by overmoulding.

8. Filter unit (10) according to claim 7,
wherein an interface of the upper casing (20) and the lower casing (30) is sealed with an overmoulded ring,
wherein the overmoulded ring (90) preferably seals the first filter (40) and/or the second filter (50) to the upper casing (20) and/or the lower casing (30) to prevent a bypass of liquid.

9. Filter unit (10) according to one of the claims 1 to 8, further comprising a liquid delivery portion (60) for delivering a liquid received via the liquid inlet (21) into the capsule (1).

10. Filter unit (10) according to one of the claims 1 to 9, further comprising a support grid (70) for the first filter (40) or the joined first and second filters (40, 50), the support grid preferably being clipped to the lower casing (30).

11. Filter unit (10) according to one of the claims 1 to 10, further comprising an air inlet (80) that is separate from the liquid inlet (21), and is preferably formed integrally with the upper casing (30).

12. Capsule (1) for preparing a beverage and/or nutritional product, the capsule (1) comprising a filter unit (10) according to one of the claims 1 to 11.

13. Capsule (1) for preparing a beverage and/or nutritional product, comprising a first compartment (3) for containing a beverage and/or nutritional ingredients and a second compartment (4) configured as a seat for receiving at least a first filter (40) and at least a second filter (50),
wherein the second filter (50) has a larger pore size than the first filter (40) and wherein the first filter is placed in fluid communication between the second filter and the first compartment.

14. Manufacturing method for a filter unit (10) for a capsule (1) for preparing a beverage and/or nutritional product, the method comprising the steps of
bringing together a first layer and a second layer of material from two separate material rolls using a derolling system,
cutting the first layer and the second layer to obtain a first filter (40) and a second filter (50), respectively,
placing the first filter (40) between an upper casing (20) and a lower casing (30) comprising a liquid inlet (21) and a liquid outlet (31), respectively, and
placing the second filter (50) between the first filter (40) and the upper casing.

## Patentansprüche

1. Filtereinheit (10) für eine Kapsel (1) zum Zubereiten eines Getränks und/oder Nahrungsmittels, wobei die Filtereinheit (1) umfasst:
ein oberes Gehäuse (20), das einen Flüssigkeitseinlass (21) umfasst oder bildet,
ein unteres Gehäuse (30), das einen Flüssigkeitsauslass (31) umfasst oder bildet,
einen ersten Filter (40), der zwischen dem oberen Gehäuse (20) und dem unteren Gehäuse (30) bereitgestellt ist;
einen zweiten Filter (50), der zwischen dem ersten Filter (40) und dem oberen Gehäuse (20) bereitgestellt ist,
wobei der zweite Filter (50) eine größere Porengröße als der erste Filter (40) aufweist.

2. Filtereinheit (10) nach Anspruch 1, wobei der zweite Filter (50) eine Porengröße von etwa 0,6 bis 20 µm, vorzugsweise von etwa 5 bis 15 µm aufweist.

3. Filtereinheit (10) nach einem der Ansprüche 1 bis 2, wobei der erste Filter (40) eine Porengröße von etwa 0,1 bis 0,45 µm, vorzugsweise von etwa 0,2 µm aufweist.

4. Filtereinheit (10) nach einem der Ansprüche 1 bis 3, wobei der erste Filter (40) ein mikrobiologischer Filter, vorzugsweise eine mikroporöse Membran ist.

5. Filtereinheit (10) nach einem der Ansprüche 1 bis 4, wobei der erste und der zweite Filter (40, 50) miteinander verbunden sind.

6. Filtereinheit (10) nach einem der Ansprüche 1 bis 5, wobei das obere Gehäuse (20) und das untere Gehäuse (30) aneinander durch Schweißen oder Festklemmen befestigt sind.

7. Filtereinheit (10) nach einem der Ansprüche 1 bis 5, wobei das obere Gehäuse (20) und das untere Gehäuse (30) aneinander durch Umspritzen befestigt sind.

8. Filtereinheit (10) nach Anspruch 7,
wobei eine Schnittstelle des oberen Gehäuses (20) und des unteren Gehäuses (30) mit einem umspritzten Ring versiegelt ist,
wobei der umspritzte Ring (90) vorzugsweise den ersten Filter (40) und/oder den zweiten Filter (50) am oberen Gehäuse (20) und/oder unteren Gehäuse (30) versiegelt, um zu verhindern, dass die Flüssigkeit um sie herumfließt.

9. Filtereinheit (10) nach einem der Ansprüche 1 bis 8, ferner umfassend einen Flüssigkeitsabgabeabschnitt (60) zum Abgeben einer Flüssigkeit, die durch den Flüssigkeitseinlass (21) in die Kapsel (1) aufgenommen wird.

10. Filtereinheit (10) nach einem der Ansprüche 1 bis 9, ferner umfassend ein Stützgitter (70) für den ersten Filter (40) oder die verbundenen ersten und zweiten Filter (40, 50), wobei das Stützgitter vorzugsweise am unteren Gehäuse (30) festgeklemmt ist.

11. Filtereinheit (10) nach einem der Ansprüche 1 bis 10, ferner umfassend einen Lufteinlass (80), der getrennt vom Flüssigkeitseinlass (21) angeordnet und vorzugsweise einstückig mit dem oberen Gehäuse (30) ausgebildet ist.

12. Kapsel (1) zum Zubereiten eines Getränks und/oder Nahrungsmittels, wobei die Kapsel (1) eine Filtereinheit (10) nach einem der Ansprüche 1 bis 11 umfasst.

13. Kapsel (1) zum Zubereiten eines Getränks und/oder Nahrungsmittels, umfassend eine erste Kammer (3) zum Aufnehmen eines Getränks und/oder von Nahrungsmittelzutaten und eine zweite Kammer (4), die als ein Sitz zum Aufnehmen mindestens eines ersten Filters (40) und mindestens eines zweiten Filters 50) konfiguriert ist,
wobei der zweite Filter (50) eine größere Porengröße als der erste Filter (40) aufweist und wobei der erste Filter in Fluidaustausch zwischen dem zweiten Filter und der ersten Kammer angeordnet ist.

14. Fertigungsverfahren für eine Filtereinheit (10) für eine Kapsel (1) zum Zubereiten eines Getränks und/oder Nahrungsmittels, wobei das Verfahren folgende Schritte umfasst:
Zusammenbringen einer ersten Schicht und einer zweiten Schicht von Material aus zwei separaten Materialrollen unter Verwendung eines Abrollsystems,
Schneiden der ersten Schicht und der zweiten Schicht, um einen ersten Filter (40) bzw. einen zweiten Filter (50) zu erhalten,
Anordnen des ersten Filters (40) zwischen einem oberen Gehäuse (20) und einem unteren Gehäuse (30), die einen Flüssigkeitseinlass (21) bzw. einen Flüssigkeitsauslass (31) umfassen, und
Anordnen des zweiten Filters (50) zwischen dem ersten Filter (40) und dem oberen Gehäuse.

## Revendications

1. Unité de filtre (10) destinée à une capsule (1) pour la préparation d'un produit de boisson et/ou nutritionnel, l'unité de filtre (1) comprenant
un boîtier supérieur (20) comprenant ou formant une entrée de liquide (21), un boîtier inférieur (30) comprenant ou formant une sortie de liquide (31), un premier filtre (40) placé entre le boîtier supérieur (20) et le boîtier inférieur (30),
un second filtre (50) placé entre le premier filtre (40) et le boîtier supérieur (20),
dans lequel le second filtre (50) a une taille de pore supérieure au premier filtre (40).

2. Unité de filtre (10) selon la revendication 1, dans laquelle le second filtre (50) a une taille de pore (p) d'environ 0,6 à 20 µm, de préférence d'environ 5 à 15 µm.

3. Unité de filtre (10) selon la revendication 1 à 2, dans laquelle le premier filtre (40) a une taille de pore d'environ 0,1 à 0,45 µm, de préférence d'environ 0,2 µm.

4. Unité de filtre (10) selon l'une des revendications 1 à 3, dans laquelle le premier filtre (40) est un filtre microbiologique, de préférence une membrane micro-poreuse.

5. Unité de filtre (10) selon l'une des revendications 1 à 4, dans laquelle les premier et second filtres (40, 50) sont fixés ensemble.

6. Unité de filtre (10) selon l'une des revendications 1 à 5, dans laquelle le boîtier supérieur (20) et le boîtier inférieur (30) sont fixés ensemble par soudage ou clipsage.

7. Unité de filtre (10) selon l'une des revendications 1 à 5, dans laquelle le boîtier supérieur (20) et le boîtier inférieur (30) sont fixés ensemble par surmoulage.

8. Unité de filtre (10) selon la revendication 7,
dans laquelle une interface du boîtier supérieur (20) et du boîtier inférieur (30) est scellée avec un anneau surmoulé,
dans laquelle l'anneau surmoulé (90) scelle de préférence le premier filtre (40) et/ou le second filtre (50) au boîtier supérieur (20) et/ou au boîtier inférieur (30) pour empêcher un contournement du liquide.

9. Unité de filtre (10) selon l'une des revendications 1 à 8, comprenant également une partie de distribution de liquide (60) pour distribuer un liquide à travers l'entrée de liquide (21) dans la capsule (1).

10. Unité de filtre (10) selon l'une des revendications 1 à 9, comprenant également une grille de support (70) pour le premier filtre (40) ou les premier et second filtres fixés (40, 50), la grille de support étant de préférence clipsée au boîtier inférieur (30).

11. Unité de filtre (10) selon l'une des revendications 1 à 10, comprenant également une entrée d'air (80) qui est distincte de l'entrée de liquide (21), et elle est de préférence formée de manière solidaire au boîtier supérieur (30).

12. Capsule (1) pour la préparation d'une boisson et/ou d'un produit nutritionnel, la capsule (1) comprenant une unité de filtre (10) selon l'une quelconque des revendications 1 à 11.

13. Capsule (1) pour la préparation d'une boisson et/ou d'un produit nutritionnel, comprenant un premier compartiment (3) pour contenir une boisson et/ou des ingrédients nutritionnels et un second compartiment (4) conçu comme un siège pour recevoir au moins un premier filtre (40) et au moins un second filtre (50),
dans lequel le second filtre (50) a une taille de pore supérieure au premier filtre (40) et dans lequel le premier filtre est placé en communication fluidique entre le second filtre et le premier compartiment.

14. Procédé de fabrication d'une unité de filtre (10) pour une capsule (1) pour la préparation d'une boisson et/ou d'un produit nutritionnel, le procédé comprenant les étapes suivantes
la réunion d'une première couche et d'une seconde couche de matériau provenant de deux rouleaux de matériaux distincts en utilisant un système de déroulement,
la découpe de la première couche et de la deuxième couche pour obtenir un premier filtre (40) et un second filtre (50), respectivement,
la mise en place du premier filtre (40) entre un boîtier supérieur (20) et un boîtier inférieur (30) comprenant une entrée de liquide (21) et une sortie de liquide (31), respectivement, et
la mise en place du second filtre (50) entre le premier filtre (40) et le boîtier supérieur.
